# EUROPÄISCHE PATENTANMELDUNG

(11) **EP 3 451 263 A1**
(43) Veröffentlichungstag der Anmeldung: **06.03.2019**
(21) Anmeldenummer: 17188701.1
(22) Anmeldetag: 31.08.2017
(51) Int. Cl.: G06Q 20/32, G06Q 20/34, H04W 12/06

(54) **SICHERHEITSSYSTEM ZUR AUSFÜHRUNG EINER ELEKTRONISCHEN ANWENDUNG**

(71) Anmelder: Deutsche Telekom AG, 53113 Bonn (DE)
(72) Erfinder: Breuer, Jörg, 57223 Kreuztal (DE); Stengel, Christian, 61191 Rosbach (DE); Rothemund, Manfred, 64283 Darmstadt (DE)
(74) Vertreter: Patentship Patentanwaltsgesellschaft mbH

(57) **Zusammenfassung**

Die Erfindung betrifft ein Sicherheitssystem (100, 200) zur Ausführung einer elektronischen Anwendung, mit: einem Server (210) mit einem gesicherten Bereich (211), in dem zumindest ein serverseitiges physikalisches Sicherheitsmodul (SM) (212), insbesondere eine Smartcard und/oder ein Hardwaresicherheitsmodul (HSM), mechanisch und kommunikationstechnisch montierbar sind, wobei das zumindest eine serverseitige physikalische Sicherheitsmodul (212) ausgebildet ist, eine elektronische Anwendung auszuführen; einem teilnehmerseitigen Kommunikationsendgerät (220) mit einem teilnehmerseitigen SM (223), das ausgebildet ist, unter Verwendung eines Authentifizierungsprotokolls einen ersten Kommunikationskanal (201) zwischen dem teilnehmerseitigen Kommunikationsendgerät (220) und dem zumindest einen serverseitigen physikalischen SM (212) aufzubauen; und einem anwendungsseitigen Kommunikationsendgerät (230) mit einem Kommunikationsmodul (231), das ausgebildet ist, mit dem teilnehmerseitigen Kommunikationsendgerät (220) zu interagieren, um einen zweiten Kommunikationskanal (202) zwischen dem anwendungsseitigen Kommunikationsendgerät (230) und dem teilnehmerseitigen Kommunikationsendgerät (220) aufzubauen, und über den zweiten Kommunikationskanal (202) und den ersten Kommunikationskanal (201) das zumindest eine serverseitige physikalische Sicherheitsmodul (212) anzuweisen (203), die elektronische Anwendung auszuführen.

## Beschreibung

Die vorliegende Erfindung betrifft ein Sicherheitssystem, einen Sicherheitsserver und ein Verfahren zur sicheren Ausführung einer elektronischen Anwendung. Insbesondere betrifft die Erfindung ein System zur mobilen und stationären Nutzung von zentralen Sicherheitselementen, d.h. ein zentralisiertes Secure Element System.

Die Brieftasche des modernen Menschen enthält neben einer Smartcard oder Chipkarte auch viele unterschiedliche andere Karten, wie z.B. Bonuskarten, Kundenkarten, Mitgliedskarten, Unternehmensausweise, Zutrittskarten für Gebäude oder Karten mit höheren Sicherheitsanforderungen, wie z.B. Payment-Karten von unterschiedlichen Geldinstituten, eine Karte für die Qualifizierte Elektronische Signatur, der neue Personalausweis, ein Elektronischer Führerschein, die Fahrerkarte für den Digitalen Fahrtenschreiber oder andere Karten. Die Anzahl der Karten nimmt hier stetig zu. Auf der anderen Seite nutzt der moderne Mensch anstelle eines "herkömmlichen Mobiltelefons" heute ein sogenanntes Smartphone, in das NFC-Technik integriert ist. Damit besteht die Möglichkeit, das Smartphone als eine virtuelle Smartcard bzw. als Kartenemulation zu verwenden. Die Funktionalität der Smartcard selbst wird über sogenannte Virtuelle-Smartcard-Apps auf dem Smartphone realisiert und die Kommunikation zwischen Smartcard und der jeweiligen Anwendung erfolgt über die NFC Schnittstelle des Smartphones. Ein Smartcard basiertes System kann damit entweder eine herkömmliche Smartcard über eine kontaktlose Schnittstelle nutzen, oder aber eine virtuelle Smartcard auf einem Smartphone über die NFC Schnittstelle verwenden. Der Nutzer kann damit entweder seine elektronische Karte auf den kontaktlosen Kartenleser legen, oder aber sein NFC-fähiges Smartphone mit der virtuellen elektronischen Karte auf diesen kontaktlosen Leser legen. Damit kann der Nutzer eines Smartcard-basierten Systems die vielen Karten aus seiner Geldbörse in sogenannte "mobile Wallets" auf sein Smartphone verlagern und die Karte dadurch mit Hilfe des Smartphones emulieren.

Allerdings bleibt die Frage offen, wie bei den emulierten Smartcards eine vergleichbare Sicherheit zur herkömmlichen Smartcard gewährleistet werden kann.

Insbesondere ist es notwendig, um die Sicherheit in einem System über Jahre hinweg sicherzustellen, die Vorgaben und damit verbunden auch die jeweiligen Komponenten im System regelmäßig zu überarbeiten und zu prüfen. Dies hat zur Folge, dass jedes System für sich selbst betrachtet werden muss und damit immer neue Kartenprodukte in unterschiedlichen Release-Zyklen in den Markt gebracht werden.

Es ist daher Aufgabe der vorliegenden Erfindung, ein System zur Ausführung von elektronischen Anwendungen mit erhöhter Sicherheit zu schaffen, das gegen verschiedene Angriffe absichert.

Diese Aufgabe wird durch die Merkmale der unabhängigen Ansprüche gelöst. Vorteilhafte Weiterbildungsformen sind Gegenstand der abhängigen Ansprüche.

Eine grundlegendes Konzept der Erfindung besteht darin, das gegen verschiedene Angriffe gesicherten Systems durch Integration beliebiger, lokal nicht verfügbarer Smartcards oder Hardwaresicherheitselementen verschiedener Bauart und unterschiedlichen Sicherheitsniveaus in beliebigen Endgeräten zu schaffen. Diese im Folgenden genannten Sicherheitsmodule (SM) sollen für mobile oder stationäre Anwendungen nutzbar gemacht werden.

Beliebige Endgeräte können dabei z.B. Smartphones, Internet of Things (IoT) Komponenten wie Aktoren oder Sensoren, Industrie 4.0 (I4.0) Gateways, interaktive Oberflächen, Navigationssysteme, Onboard-Units für Mautsysteme oder Tachographsysteme und viele mehr sein.

Aufgrund der Schnelllebigkeit im Bereich der mobilen und stationären Endgeräte muss die Integration der Technologien in beliebige Endgeräte weitestgehend "Endgeräte neutral" erfolgen. Hinzu kommt, dass die hohen Sicherheitsanforderungen und damit verbundene Zertifizierungen der jeweiligen SMs bzw. SM-Anwendung aufrechterhalten werden müssen.

Insbesondere basiert die Erfindung auf der Idee, vorhandene und neue Mechanismen und Technologien in geeigneter Form so zu kombinieren, dass mobile und stationäre Endgeräte die eingebauten Sicherheitsanker (UICC, eSIM, Secure Element, Secure µSD-Card oder ähnlichem) nutzen, um über ein Secure-Authentification-Protocol und dem Einsatz eines Gatekeepers zum Schutz gegen Attacken von außen (DDoS-Atacken, Attacken zur Herstellung eines Botnetzes, ...) die Sicherheitsmechanismen der im Backend verfügbaren SMs nutzen können.

Dieses Konzept hat den Vorteil, dass beliebig viele Sicherheitselemente mit unterschiedlichsten Funktionalitäten auf den Endgeräten zur Verfügung stehen und die meist in der Funktionalität und dem Speicherplatz beschränkten Sicherheitsanker der Endgeräte nur zur Authentifikation gegenüber dem Backend und damit gegenüber den SMs genutzt werden.

Weiterhin ist zu betonen, dass es sich bei den SMs im Backend nicht um virtuelle Smartcards, also in Software simulierte Sicherheitselemente handelt, sondern tatsächlich Smartcard Funktionalität und Technologie aus dem Backend bereitgestellt wird, um damit auch den höchsten Sicherheitsanforderungen gerecht werden zu können. Zudem wird die Integration in ein bestehendes System vereinfacht, da sich die SMs identisch zu einer im System eingesetzten Smartcard verhält.

Ergänzend können jedoch auch virtuelle Smartcards, Secure Credentials, Secure Token oder andere Funktionalitäten über den authentisierten und abgesicherten Kanal aus dem Backend für Endgeräte bereitgestellt werden.

In der folgenden Beschreibung werden Smartcards, Chipkarten und Hardwaresicherheitselemente (HSMs) näher beschrieben. Smartcards, Chipkarten oder Hardwaresicherheitselemente in Form von HSMs sind die am besten geeigneten Hardwaremodule als Schlüsselträger für kryptografische Prozesse zur Realisierung von Authentizität, Identität und Vertraulichkeit. Smartcards werden dabei über sogenannte Kartenleser oder Kartenterminals in der jeweiligen Anwendung bzw. dem Smartcard basierten System genutzt. Die Anbindung kann dabei entweder über die Kontakt basierte Schnittstelle des Chips (z.B. über das ISO/IEC Protokoll T=1 nach ISO 7816-3) oder über eine kontaktlose Schnittstelle (z.B. über das ISO/IEC Protokoll T=CL nach ISO 14443 oder den NFC Standard für den kontaktlosen Austausch von Daten per Funkschnittstelle) genutzt werden. HSMs hingegen sind in der Regel hochperformante Module, die über eine direkte TCP/IP-Verbindung verfügen und im Backend zur Authentifikation von Systemen gegeneinander oder gegenüber Smartcards im Feld verwendet werden.

Smartcards oder HSMs werden meist dann verwendet, wenn höhere Sicherheitsanforderungen an ein System und dessen Komponenten gestellt werden. Die Anforderungen können dabei entweder vom Betreiber des Systems wie z.B. bei Debit/Kredit Kartensystemen von Mastercard und Visa selbst definiert oder aber auch durch gesetzliche Vorgaben wie beispielsweise bei der Qualifizierten Elektronischen Signatur (QES) geregelt werden. Häufig müssen daher Smartcards oder HSMs nach entsprechenden Technischen Richtlinien z.B. in Deutschland des Bundesamts für Sicherheit in der Informationstechnik (BSI) entwickelt und die geforderte Sicherheit durch eine Sicherheitsevaluierung bzw. Zertifizierung nachgewiesen werden. Dabei wird üblicherweise von einer unabhängigen/akkreditierten Stelle geprüft, ob die Smartcards oder HSMs die in z.B. sogenannten "Protection Profiles" (PP) genannten Sicherheitsziele erfüllen. Erst wenn die Sicherheitszertifizierung und die Konformität zur Technischen Richtlinie bestätigt ist, dürfen diese Karten oder HSMs im jeweiligen System eingesetzt werden.

Mit der Integration der NFC-Technik in die Smartphones besteht die Möglichkeit, das Smartphone als eine virtuelle Smartcard bzw. als Kartenemulation zu verwenden. Die Funktionalität der Smartcard selbst wird über sogenannte Virtuelle-Smartcard-Apps auf dem Smartphone realisiert und die Kommunikation zwischen Smartcard und der jeweiligen Anwendung erfolgt über die NFC Schnittstelle des Smartphones. Ein Smartcard basiertes System kann somit entweder eine herkömmliche Smartcard über eine kontaktlose Schnittstelle nutzen, oder aber eine virtuelle Smartcard auf einem Smartphone über die NFC Schnittstelle verwenden. Dem Kunden wird damit die Möglichkeit gegeben, dass er entweder seine Payment-Karte auf den kontaktlosen Kartenleser an der Kasse im Supermarkt legen kann, oder aber sein NFC-fähiges Smartphone mit der virtuellen Payment-Karte auf diesen kontaktlosen Leser legen kann.

Die vielen Karten aus der Geldbörse können somit in sogenannte "mobile Wallets" auf einem Smartphone verlagert werden und die Karte dadurch mit Hilfe des Smartphones emuliert werden. Der Nutzer kann somit auf die Geldbörse verzichten, sofern er sein Smartphone dabei hat und alle Karten in sogenannten virtuellen Karten auf dem Smartphone integriert hat und für höhere Sicherheitsanforderungen ein in das Smartphone eingebautes Sicherheitselement in die Kartenemulation eingebunden wird (Card Emulation).

Aber es bleibt die Frage wie bei den virtuellen Smartcards eine vergleichbare Sicherheit zur herkömmlichen Smartcard hin zu bekommen ist. Dies kann nur über die gleichen Prozesse erfolgen wie bei Smartcards selbst. Man entwickelt die virtuellen Smartcards ebenfalls nach den Vorgaben der Technischen Richtlinien zum Einsatz im mobilen Endgerät und bestätigt über entsprechende Sicherheitszertifizierungen wie z. B. nach Common Criteria, dass die Sicherheitsziele des jeweiligen "Protection Profiles", d.h. Schutzprofiles erfüllt sind. Wer sich jedoch genauer mit solchen Sicherheitszertifizierungen beschäftigt, erkennt schnell, dass zum einen die Hardware des Endgerätes dies nicht ohne weitere Sicherheitshardware innerhalb dieser Endgeräte ermöglicht und zum anderen eine solche Zertifizierung nur dann gültig ist, wenn die Virtuelle Smartcard auf genau dem Smartphone mit dem zum Zeitpunkt der Zertifizierung betrachteten Betriebssystem genutzt wird. Wenn also eine Firma wie Apple oder Samsung zwischenzeitlich eine neue Version oder ein neues Release von iOS oder Android auf das Smartphone aufgebracht hat, ist die zertifizierte Einsatzumgebung der Virtuellen Smartcard nicht mehr gegeben. Die Nutzung dieser Virtuellen Smartcard muss dann unterbunden werden, bis eine sogenannte Re-Zertifizierung erfolgt ist - Im Hinblick auf die schnellen Entwicklungszyklen von Smartphones und die lange Dauer eines Zertifizierungsverfahrens stellt dies einen scheinbar aussichtslosen Kampf dar.

Erschwerend kommt hinzu, dass Smartphones oder Backendsysteme wie Router immer größeren Gefahren vor Angriffen von außen ausgesetzt sind. So stellt nach dem Urteil von Sicherheitsexperten das Internet 4.0 mit seiner wachsenden Anzahl an Komponenten u.A. zur Heimautomatisierung einen "Roboter von Größe eines Planeten" dar, mit dem sich mittelfristig weite Teile der vernetzen Welt lahmlegen oder für kriminelle Zwecke und Terrorangriffe missbrauchen lassen. So muss gewährleistet sein, dass bereit gestellte Sicherheitsmechanismen nicht durch Angreifer aus dem Netz missbraucht werden können.

Um dem schnellen Entwicklungszyklus der Smartphones gerecht zu werden, wurde im Jahr 2012 die so genannte "host based card emulation" (HCE) erfunden und ausgerollt.

Hierbei werden die bereit zu stellenden Kartenfunktionen nicht auf einem Sicherheitselement im Endgerät implementiert sondern laufen als Emulation im Betriebssystem des Smartphones. Sie interagieren dabei direkt mit dem NfC-Controller sowie den Zahlungssystemen im Backend. Jedes Android-Smartphone ab Android-Version 4.4 unterstützt HCE.

Da es sich bei HCE um eine reine Softwareimplementierung handelt, löst dieser Ansatz die Anforderung an einer Sicherheitszertifizierung nur unzureichend. So müsste für eine Sicherheitszertifizierung auch hier das komplette Android-Betriebssystem auf jedem möglichen Endgerät evaluiert werden. Zudem sind die Schlüssel zur Authentifikation mit dem Backend bei HCE in der Software des Betriebssystems vergleichsweise unsicher gespeichert, so dass ein Hacker mit ein wenig Aufwand an das Schlüsselmaterial gelangen kann. Hinzu kommt die Tatsache, dass es dem Anwender bei HCE nicht möglich ist, beliebige physikalische Karten in das System zu integrieren.

In der folgenden Beschreibung werden teilnehmerseitige Kommunikationsendgeräte, wie z.B. Mobiltelefone, Smartphones, etc. näher erläutert. Ein Smartphone ist ein Mobiltelefon, das mehr Computerfunktionalität und -konnektivität als ein herkömmliches Mobiltelefon zur Verfügung stellt. Smartphones können z.B. Funktionen eines PDA bzw. Tablet-Computers mit der Funktionalität eines Mobiltelefons vereinen. Ferner können Smartphones die Funktion eines transportablen Medienabspielgerätes, einer Digital- und Videokamera und eines GPS-Navigationsgeräts bereitstellen. Viele Smartphones sind mit einem hoch auflösenden berührungsempfindlichen Bildschirm ausgestattet. Dieser kann sowohl Standard-Webseiten als auch mobil optimierte Webseiten darstellen.

Eine schnelle Internet-Anbindung erfolgt wahlweise mittels einer mobilen Breitbandverbindung über den Mobilfunkanbieter oder per WLAN. Ein wichtiges Merkmal ist auch, dass der Nutzer über ein Internet-Downloadportal (einen "App Store") auf einfache Weise Zusatzprogramme ("Apps") installieren kann, die es mittlerweile für eine große Vielfalt von Anwendungszwecken gibt. Ein Smartphone kann prinzipiell über seine Gebrauchsdauer per Software- und Betriebssystem-Update der technischen Entwicklung folgen.

Mit dem Einzug von immer neueren Smartphones und komplexeren mobilen Endgeräten ändern sich auch die Vorgaben der entsprechenden "Protection Profiles", d.h.

Schutzprofile. Die qualifizierte elektronische Signatur (QES) wird beispielsweise für die Smartcard nach entsprechenden Technischen Schutzprofilen und digitalen Signaturen für die Anforderung an ein System oder die darin eingesetzten Komponenten erzeugt. Die QES ist eine fortgeschrittene elektronische Signatur, die auf einem (zum Zeitpunkt ihrer Erzeugung gültigen) qualifizierten Zertifikat beruht und mit einer sicheren Signaturerstellungseinheit (SSEE) erstellt wurde.

Zum Betrieb von Smartcards im Zusammenspiel mit Computersystemen werden Chipkartenterminals verwendet. Für die Anschaltung dieser Terminals haben sich weltweit Standards entwickelt und etabliert. Somit kann davon ausgegangen werden, dass Smartcards im Zugriff dieser Terminals sich wiederum geeignet gegenüber Computersystemen anmelden können.

In der folgenden Beschreibung werden Nahbereichsschnittstellen, wie z.B. NFC, Bluetooth, etc. näher erläutert. Near Field Communication ("Nahfeldkommunikation", NFC) ist ein internationaler Übertragungsstandard zum kontaktlosen Austausch von Daten per Funktechnik über kurze Strecken von bis zu 10 cm und einer Datenübertragungsrate von maximal 424 kBit/s. Bisher kommt diese Technik vor allem in Lösungen für Micropayment - bargeldlose Zahlungen kleiner Beträge - zum Einsatz.

In der folgenden Beschreibung werden Systeme zur Card Emulation und zur Host Card Emulation näher beschrieben. Viele Android-betriebene Geräte, die NFC-Funktionalität bereitstellen, unterstützen bereits die NFC-Kartenemulation. In den meisten Fällen wird die Karte durch einen separaten Chip im Gerät emuliert, das als sicheres Element (Secure Element) bezeichnet wird. Viele SIM-Karten, die von Mobilfunkanbietern zur Verfügung gestellt werden, enthalten auch ein sicheres Element.

Das Betriebssystem Android 4.4 beispielsweise führt eine zusätzliche Methode der Kartenemulation ein, die kein sicheres Element beinhaltet, genannt Host-basierte Kartenemulation oder Host Card Emulation. Dies ermöglicht es jedem Android-Programm, eine Karte zu emulieren und direkt mit dem NFC-Leser zu kommunizieren. Wenn eine NFC-Karte unter Verwendung einer Host-basierten Kartenemulation emuliert wird, werden die Daten an die Host-CPU weitergeleitet, auf der Android-Anwendungen direkt ausgeführt werden, anstatt die NFC-Protokollrahmen zu einem sicheren Element zu führen.

In der folgenden Beschreibung werden Server, teilnehmerseitige Kommunikationsendgeräte und anwendungsseitige Kommunikationsendgeräte beschrieben. Teilnehmerseitige Kommunikationsendgeräte können z.B. Smartphones oder Mobiletelefone oder Laptops/Notebooks oder andere mobile Terminals des Teilnehmers sein, mit denen er seinen Zugang zur elektronischen Anwendung abwickeln möchte, wie z.B. einer Zugangs-Applikation, z.B. einer Payment Funktion. Anwendungsseitige Kommunikationsendgeräte können verschiedene Terminals auf Seiten des Anwenders sein, z.B. ein Kassenterminal im Supermarkt oder ein Zugangskontrollgerät im Gebäude.

Für die Kommunikation zwischen dem Server und dem teilnehmerseitigen Kommunikationsendgerät bestehen verschiedene Technologien, wie z.B. über das Mobilfunknetz oder das Festnetz. Bei dem Mobilfunknetz kann es sich beispielsweise um ein Mobilfunknetz eines Mobilfunkbetreibers handeln, d.h. ein zelluläres Netz, beispielsweise unter Verwendung eines Mobilfunkstandards wie z.B. 5G, LTE, UMTS, GSM, etc. Bei dem Festnetz kann es sich beispielsweise um ein Telefonnetz eines Telefonbetreibers handeln, d.h. ein drahtgebundenes Netz, wie beispielsweise ein POTS, ISDN, xDSL oder ein Kabel-Netz.

Die Kommunikation zwischen dem teilnehmerseitigen Kommunikationsendgerät und dem anwendungsseitigen Kommunikationsgerät kann über ein drahtloses Nahbereichsnetz erfolgen, wie z.B. WLAN, Bluetooth, ZigBee, etc. Als Protokolle zur Datenübertragung können beispielsweise IPv4 oder IPv6 genutzt werden. Eine gesicherte Übertragung kann über das Protokoll TCP/IP erfolgen, das im IP-Stack verfügbar ist.

Server und Kommunikationsendgeräte, wie im Folgenden beschrieben, können Kommunikationsentitäten bzw. Kommunikationsknoten umfassen. Bei einer Kommunikationsentität handelt es sich um eine Vorrichtung, die eine spezielle Funktion ausführen kann, z.B. eine Authentifizierungsfunktionalität, eine Gateway- oder Router-Funktionalität, und entweder in Hardware oder in Software realisiert sein kann. Die Kommunikationsentität kann Hardware und/oder Software umfassen, um die technischen Funktionen, wie unten beschrieben, bereitzustellen.

Server und Kommunikationsendgeräte, wie im Folgenden beschrieben, können Mikroprozessoren, Mikrochips, ASICs und/oder DSPs umfassen. Die Server und Kommunikationsendgeräte können beispielsweise über ein Modem, eine Netzwerkkarte, einen Netzwerkabschluss oder einen Netzwerkadapter verfügen. Die Server und Kommunikationsendgeräte können als separat stehende physikalische Einheiten aufgestellt sein oder einige ihrer Funktionalitäten können sich in der Cloud befinden. Damit können abstrahierte IT-Infrastrukturen wie beispielsweise Rechenkapazität, Datenspeicher, Netzwerkkapazitäten, fertige Software oder dynamisch an den Bedarf angepasst über ein Netzwerk zur Verfügung gestellt werden.

Die im Folgenden vorgestellten Verfahren und Systeme können von verschiedener Art sein. Die einzelnen beschriebenen Elemente können durch Hardware- und/oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Gemäß einem ersten Aspekt betrifft die Erfindung ein Sicherheitssystem zur Ausführung einer elektronischen Anwendung, mit: einem Server mit einem gesicherten Bereich, in dem zumindest ein serverseitiges physikalisches Sicherheitsmodul (SM), insbesondere eine Smartcard und/oder ein Hardwaresicherheitsmodul (HSM), mechanisch und kommunikationstechnisch montierbar sind, wobei das zumindest eine serverseitige physikalische Sicherheitsmodul ausgebildet ist, eine elektronische Anwendung auszuführen; einem teilnehmerseitigen Kommunikationsendgerät mit einem teilnehmerseitigen SM, das ausgebildet ist, unter Verwendung eines Authentifizierungsprotokolls einen ersten Kommunikationskanal zwischen dem teilnehmerseitigen Kommunikationsgerät und dem zumindest einen serverseitigen physikalischen SM aufzubauen; und einem anwendungsseitigen Kommunikationsendgerät mit einem Kommunikationsmodul, das ausgebildet ist, mit dem teilnehmerseitigen Kommunikationsendgerät zu interagieren, um einen zweiten Kommunikationskanal zwischen dem anwendungsseitigen Kommunikationsendgerät und dem teilnehmerseitigen Kommunikationsendgerät aufzubauen, und über den zweiten Kommunikationskanal und den ersten Kommunikationskanal das zumindest eine serverseitige physikalische Sicherheitsmodul anzuweisen, die elektronische Anwendung auszuführen.

Dies bietet den Vorteil, dass ein Sicherheitssystem geschaffen wird, das gegen verschiedene Angriffe durch Integration beliebiger, lokal nicht verfügbarer Smartcards oder Hardwaresicherheitselementen verschiedener Bauart und unterschiedlichen Sicherheitsniveaus in beliebigen Endgeräten gegen verschiedenste Angriffe gesichert werden kann. Die Sicherheitsmodule werden damit für mobile oder stationäre Anwendungen nutzbar gemacht.

Dieses Sicherheitssystem hat ferner den Vorteil, dass beliebig viele Sicherheitselemente mit unterschiedlichsten Funktionalitäten auf den Endgeräten zur Verfügung stehen und die meist in der Funktionalität und dem Speicherplatz beschränkten Sicherheitsanker der Endgeräte nur zur Authentifikation gegenüber dem Server und damit gegenüber den SMs genutzt werden.

Außerdem handelt es sich bei den SMs im Server nicht um virtuelle Smartcards, also in Software simulierte Sicherheitselemente, sondern es wird tatsächlich Smartcard Funktionalität und Technologie aus dem Backend bereitgestellt, um damit auch den höchsten Sicherheitsanforderungen gerecht werden zu können. Zudem wird die Integration in ein bestehendes System vereinfacht, da sich die SMs identisch zu einer im System eingesetzten Smartcard verhalten.

Gemäß einer Ausführungsform des Sicherheitssystems umfasst das teilnehmerseitige Kommunikationsendgerät eine Teilnehmerschnittstelle, die ausgebildet ist, eine Authentisierung des Teilnehmers zu erfassen und an das teilnehmerseitige SM weiterzuleiten; und das teilnehmerseitige SM ist ausgebildet, den ersten Kommunikationskanal basierend auf der Authentisierung des Teilnehmers unter Verwendung des Authentifizierungsprotokolls aufzubauen.

Dies bietet den Vorteil, dass der Teilnehmer sich mit seinem Schlüsselmaterial überall, wo er sich gerade befindet, mit seinem Kommunikationsgerät, z.B. seinem Smartphone, authentifizieren kann.

Gemäß einer Ausführungsform des Sicherheitssystems ist in dem gesicherten Bereich des Servers eine Mehrzahl von serverseitigen physikalischen SMs montierbar, wobei jedem der serverseitigen physikalischen SMs eine entsprechende Identifikation zugeordnet ist, und die Teilnehmerschnittstelle ist ausgebildet, eine Eingabe des Teilnehmers mit einer Identifizierung eines bestimmten serverseitigen physikalischen SMs zu erfassen und an das teilnehmerseitige SM weiterzuleiten; und das teilnehmerseitige SM ist ausgebildet, den ersten Kommunikationskanal zu dem serverseitigen physikalischen SM aufzubauen, dessen Identifikation der Identifizierung aus der Eingabe des Teilnehmers entspricht.

Dies bietet den Vorteil, dass der Teilnehmer flexibel das jeweilige Sicherheitsmodul auswählen kann, welches er für die entsprechende elektronische Anwendung gerade benötigt, z.B. kann er seine Zutrittskarte auswählen oder aber seine Bankkarte oder eine andere Berechtigungskarte, die im Server sicher abgelegt sind.

Gemäß einer Ausführungsform umfasst das Sicherheitssystem ein Gateway zum Eintritt in den gesicherten Bereich des Servers, wobei das Gateway einen Gatekeeper umfasst, der ausgebildet ist, nur registrierten teilnehmerseitigen Kommunikationsendgeräten den Zugang über das Gateway in den gesicherten Bereich des Servers zu ermöglichen, um den ersten Kommunikationskanal mit dem zumindest einen serverseitigen physikalischen SM aufzubauen.

Der Einsatz eines Gateways mit Gatekeeper bietet Schutz gegen Attacken von außen, z.B. DDoS-Atacken, Attacken zur Herstellung eines Botnetzes, etc. Damit können ferner die Sicherheitsmechanismen der im Backend verfügbaren SMs genutzt werden.

Gemäß einer Ausführungsform des Sicherheitssystems ist das serverseitige physikalische Sicherheitsmodul (SM) nur über eine nicht routingfähige IP Adresse kommunikationstechnisch erreichbar.

Dies bietet den Vorteil erhöhter Sicherheit, da die IP Adresse nicht von außen über einen Router erreichbar ist. Nur der Server kann auf das Sicherheitsmodul zugreifen.

Gemäß einer Ausführungsform des Sicherheitssystems umfasst das teilnehmerseitige Kommunikationsendgerät eine Nahbereichskommunikationsschnittstelle, die ausgelegt ist, mit einer entsprechenden Nahbereichskommunikationsschnittstelle des anwendungsseitigen Kommunikationsendgeräts zu interagieren, um den zweiten Kommunikationskanal aufzubauen.

Dies bietet den Vorteil, dass der zweite Kommunikationskanal sicher aufgebaut werden kann, da die Nahbereichskommunikation, beispielsweise vorzugsweise im Bereich von Zentimetern oder maximal bis zu Metern, nicht von außen ausgespäht werden kann ohne dass es dem Nutzer auffällt.

Gemäß einer Ausführungsform des Sicherheitssystems umfasst das teilnehmerseitige Kommunikationsendgerät ein ggf. zertifiziertes Hardware-Element, insbesondere ein Secure Element, eine UICC, eine eSIM oder eine Secure µSD-Karte, das ausgebildet ist, Schlüsselmaterial zur Ausführung des Authentifizierungsprotokolls sicher aufzubewahren.

Dies bietet den Vorteil, dass der Teilnehmer sich an seinem teilnehmerseitigen Kommunikationsendgerät sicher authentifizieren kann und damit den sicheren Aufbau der beiden Kommunikationskanäle und der Anweisung an die SM im Server initiieren kann.

Gemäß einer Ausführungsform umfasst das Sicherheitssystem eine Box, die im gesicherten Bereich des Servers austauschbar montierbar ist, und ausgebildet ist, eine Mehrzahl von Smartcards aufzunehmen und kommunikationstechnisch zugänglich zu machen, wobei jede der Smartcards in der Box austauschbar montierbar ist.

Dies bietet den Vorteil, dass sowohl die Box als auch die Karten in der Box ausgetauscht werden können, um so beispielsweise einen Software-Update durchzuführen. Ferner können alte, nicht mehr aktuelle Karten ohne großen Aufwand ausgetauscht werden. In der Box können eine Vielzahl von Karten für die verschiedensten Anwendungen unabhängig voneinander verwahrt werden.

Gemäß einer Ausführungsform des Sicherheitssystems ist das zumindest eine serverseitige physikalische SM ausgebildet, dem teilnehmerseitigen Kommunikationsendgerät über den ersten Kommunikationskanal sicherheitsrelevante Funktionen, insbesondere virtuelle Smart Cards, Secure Credentials und/oder Secure Tokens bereitzustellen.

Dies bietet den Vorteil, dass der Teilnehmer seine Passwörter und Credentials sich nicht mehr merken braucht, es reicht, wenn er nur das Schlüsselmaterial zur Authentifizierung gegenüber seinem Smartphone sich merkt.

Gemäß einer Ausführungsform des Sicherheitssystems ist der Server ausgebildet, einen Update des zumindest einen serverseitigen physikalischen Sicherheitsmoduls auszuführen, um eine Sicherheitsfunktion und/oder einen Algorithmus auf dem zumindest einen serverseitigen physikalischen SM zu erneuern.

Dies bietet den Vorteil, dass sich die Sicherheitsmodule effizient von der Zentrale, d.h. dem Server, aus verwalten lassen. Falls neue Funktionen verfügbar sind, lässt sich dies durch einen zentralen Update ausführen.

Gemäß einem zweiten Aspekt betrifft die Erfindung ein Sicherheitssystem zur Ausführung einer elektronischen Anwendung, mit: einem Server mit einem gesicherten Bereich, in dem zumindest ein serverseitiges physikalisches Sicherheitsmodul (SM), insbesondere eine Smartcard und/oder ein Hardwaresicherheitsmodul (HSM), mechanisch und kommunikationstechnisch montierbar sind, wobei das zumindest eine serverseitige physikalische Sicherheitsmodul ausgebildet ist, eine elektronische Anwendung auszuführen; und einem teilnehmerseitigen Kommunikationsendgerät mit einem teilnehmerseitigen physikalischen SM, das ausgebildet ist, unter Verwendung eines Authentifizierungsprotokolls einen ersten Kommunikationskanal zwischen dem teilnehmerseitigen Kommunikationsendgerät und dem zumindest einen serverseitigen physikalischen SM aufzubauen; und einem anwendungsseitigen Kommunikationsmodul, das ausgebildet ist, mit einem anwendungsseitigen Kommunikationsendgerät zu interagieren, um einen zweiten Kommunikationskanal zwischen dem anwendungsseitigen Kommunikationsendgerät und dem teilnehmerseitigen Kommunikationsendgerät aufzubauen, und über den zweiten Kommunikationskanal und den ersten Kommunikationskanal das zumindest eine serverseitige physikalische Sicherheitsmodul anzuweisen, die elektronische Anwendung auszuführen.

Dies bietet den Vorteil, dass ein Sicherheitssystem geschaffen wird, das gegen verschiedene Angriffe durch Integration beliebiger, lokal nicht verfügbarer Smartcards oder Hardwaresicherheitselementen verschiedener Bauart und unterschiedlichen Sicherheitsniveaus in beliebigen Endgeräten gegen verschiedenste Angriffe gesichert werden kann. Die Sicherheitsmodule werden damit für mobile oder stationäre Anwendungen nutzbar gemacht.

Dieses Sicherheitssystem hat ferner den Vorteil, dass beliebig viele Sicherheitselemente mit unterschiedlichsten Funktionalitäten auf den Endgeräten zur Verfügung stehen und die meist in der Funktionalität und dem Speicherplatz beschränkten Sicherheitsanker der Endgeräte nur zur Authentifikation gegenüber dem Server und damit gegenüber den SMs genutzt werden.

Außerdem handelt es sich bei den SMs im Server nicht um virtuelle Smartcards, also in Software simulierte Sicherheitselemente, sondern es wird tatsächlich Smartcard Funktionalität und Technologie aus dem Backend bereitgestellt, um damit auch den höchsten Sicherheitsanforderungen gerecht werden zu können. Zudem wird die Integration in ein bestehendes System vereinfacht, da sich die SMs identisch zu einer im System eingesetzten Smartcard verhalten.

Gemäß einer Ausführungsform des Sicherheitssystems umfasst das teilnehmerseitige Kommunikationsendgerät eine Nahbereichskommunikationsschnittstelle, die ausgelegt ist, mit einer entsprechenden Nahbereichskommunikationsschnittstelle des anwendungsseitigen Kommunikationsendgeräts zu interagieren, um den zweiten Kommunikationskanal aufzubauen.

Dies bietet den Vorteil, dass der zweite Kommunikationskanal sicher aufgebaut werden kann, da die Nahbereichskommunikation, beispielsweise vorzugsweise im Bereich von Zentimetern oder maximal bis zu Metern, nicht von außen ausgespäht werden kann ohne dass es dem Nutzer auffällt.

Gemäß einem dritten Aspekt betrifft die Erfindung einen Sicherheitsserver zum sicheren Ausführen einer elektronische Anwendung, mit: einem gesicherten Bereich, in dem zumindest ein serverseitiges physikalisches Sicherheitsmodul (SM), insbesondere eine Smartcard und/oder ein Hardwaresicherheitsmodul (HSM), mechanisch und kommunikationstechnisch montierbar sind, wobei das zumindest eine serverseitige physikalische Sicherheitsmodul ausgebildet ist, eine elektronische Anwendung auszuführen; wobei das zumindest eine serverseitige physikalische Sicherheitsmodul ausgebildet ist, unter Verwendung eines Authentifizierungsprotokolls einen ersten Kommunikationskanal zwischen einem physikalischen SM eines teilnehmerseitigen Kommunikationsgeräts und dem zumindest einen serverseitigen physikalischen SM aufzubauen und die elektronische Anwendung basierend auf einer über den ersten Kommunikationskanal empfangenen Anweisung auszuführen.

Dieser Sicherheitsserver bietet den Vorteil, dass der Server in der Lage ist, den Teilnehmer bei seinen Transaktionen und elektronischen Anwendungen gegen verschiedene Angriffe zu schützen, und zwar durch Integration beliebiger, lokal nicht verfügbarer Smartcards oder Hardwaresicherheitselementen verschiedener Bauart und unterschiedlichen Sicherheitsniveaus in beliebigen Endgeräten. Die Sicherheitsmodule im Server können damit für mobile oder stationäre Anwendungen nutzbar gemacht werden.

Dieser Sicherheitsserver hat ferner den Vorteil, dass beliebig viele Sicherheitselemente mit unterschiedlichsten Funktionalitäten auf den Endgeräten zur Verfügung stehen und die meist in der Funktionalität und dem Speicherplatz beschränkten Sicherheitsanker der Endgeräte nur zur Authentifikation gegenüber dem Server und damit gegenüber den SMs genutzt werden.

Außerdem handelt es sich bei den SMs im Server nicht um virtuelle Smartcards, also in Software simulierte Sicherheitselemente, sondern es wird tatsächlich Smartcard Funktionalität und Technologie aus dem Backend bereitgestellt, um damit auch den höchsten Sicherheitsanforderungen gerecht werden zu können. Zudem wird die Integration in ein bestehendes System vereinfacht, da sich die SMs identisch zu einer im System eingesetzten Smartcard verhalten.

Gemäß einer Ausführungsform umfasst der Sicherheitsserver ein Gateway zum Eintritt in den gesicherten Bereich des Servers, wobei das Gateway einen Gatekeeper umfasst, der ausgebildet ist, nur registrierten teilnehmerseitigen Kommunikationsendgeräten den Zugang über das Gateway in den gesicherten Bereich des Servers zu ermöglichen, um den ersten Kommunikationskanal mit dem zumindest einen serverseitigen physikalischen SM aufzubauen.

Der Einsatz eines Gateways mit Gatekeeper bietet Schutz gegen Attacken von außen, z.B. DDoS-Atacken, Attacken zur Herstellung eines Botnetzes, etc. Damit können ferner die Sicherheitsmechanismen der im Backend verfügbaren SMs genutzt werden.

Gemäß einem vierten Aspekt betrifft die Erfindung ein Verfahren zur sicheren Ausführung einer elektronischen Anwendung, mit folgenden Schritten: Aufbauen eines ersten Kommunikationskanals zwischen einem physikalischen Sicherheitsmodul (SM) eines teilnehmerseitigen Kommunikationsendgeräts und einem serverseitigen physikalischen Sicherheitsmodul (SM) unter Verwendung eines Authentifizierungsprotokolls, wobei das serverseitige physikalische SM in einem gesicherten Bereich eines Servers mechanisch und kommunikationstechnisch montierbar ist; Aufbauen eines zweiten Kommunikationskanals zwischen einem anwendungsseitigen Kommunikationsendgerät und dem teilnehmerseitigen Kommunikationsendgerät; und Übermitteln einer Anweisung des anwendungsseitigen Kommunikationsendgeräts über den zweiten Kommunikationskanal und den ersten Kommunikationskanal an das serverseitige physikalische Sicherheitsmodul, eine elektronische Anwendung auszuführen.

Dies bietet den Vorteil, dass das Verfahren in der Lage ist, den Teilnehmer bei seinen Transaktionen und elektronischen Anwendungen gegen verschiedenste Angriffe zu schützen, und zwar durch Integration beliebiger, lokal nicht verfügbarer Smartcards oder Hardwaresicherheitselemente verschiedener Bauart und unterschiedlicher Sicherheitsniveaus in beliebigen Endgeräten.

Weitere Ausführungsbeispiele werden Bezug nehmend auf die beiliegenden Zeichnungen erläutert. Es zeigen:
Fig. 1 ein Blockschaltbild des Aufbaus eines Sicherheitssystems 100 gemäß einer beispielhaften ersten Ausführungsform;
Fig. 2 ein Blockschaltbild des Aufbaus eines Sicherheitssystems 200 gemäß einer beispielhaften zweiten Ausführungsform; und
Fig. 3 eine schematische Darstellung eines Verfahrens 300 zur sicheren Ausführung einer elektronischen Anwendung gemäß einer beispielhaften Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

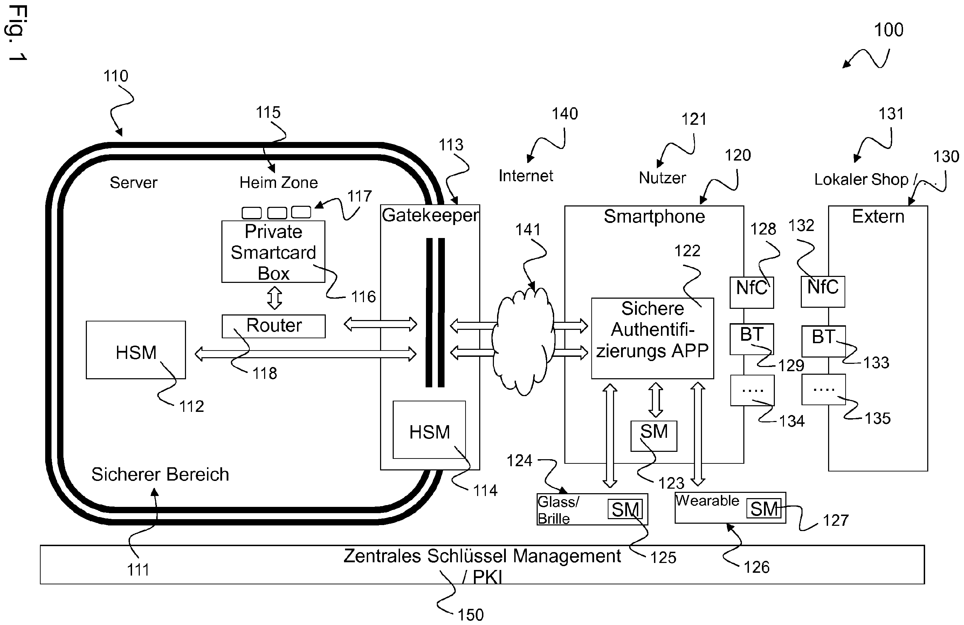

Fig. 1 zeigt ein Blockschaltbild des Aufbaus eines Sicherheitssystems 100 gemäß einer beispielhaften ersten Ausführungsform. Es handelt sich dabei um eine beispielhafte Architektur eines Private-Smartcard-Systems 100 bei dem ein Smartphone 120 an die zentral bereitgestellten Sicherheitselemente 117, 112 angebunden ist.

Das Sicherheitssystem 100 umfasst einen Server 110 bzw. Backend mit gesichertem Bereich 111, in dem sich in einer privaten Smartcard Box 116 ein oder mehrere SD Karten stecken bzw. einbauen lassen. In dem gesicherten Bereich 111 können sich auch ein oder mehrere Hardwaresicherheitsmodule 112 befinden. Der gesicherte Bereich 111 ist über ein Gateway mit Gatekeeper 113 von extern zu erreichen.

Das Sicherheitssystem 100 umfasst ferner ein teilnehmerseitiges Kommunikationsendgerät eines Nutzers 121, hier ein Smartphone 120 mit einer sicheren Authentifizierungs-App 122 und einem Sicherheitsmodul (SM). Externe Geräte wie Wearables 126, d.h. tragbare Geräte, mit Sicherheitsmodul 127 und/oder eine intelligente Brille "Glasses" 124 mit SM 125 lassen sich über die sichere Authentifizierungs-App 122 an das Smartphone 120 anschließen.

Das Sicherheitssystem 100 umfasst ferner ein anwenderseitiges Kommunikationsendgerät 130 mit Nahbereichsschnittstelle(n), wie z.B. NfC 132, Bluetooth 133 und anderen 135, die mit entsprechenden Kommunikationsschnittstellen 128, 129, 134 auf dem Smartphone im Nahbereich kommunizieren können. Das anwenderseitige Kommunikationsendgerät 130 kann z.B. ein Bezahlterminal im lokalen Shop 131 oder ein Zutrittskontrollterminal im Eingang einer Firma sein.

Über ein zentrales Schlüssel Management System / PKI 150 wird die Schlüsselverwaltung abgewickelt.

Die Idee des Sicherheitssystems 100 ist es, eine Smartcard oder die Funktionen eines HSM nicht - wie bei der HCE - als virtuelle Smartcard in das Smartphone zu verlagern, sondern die unveränderten Smartcards 117 der verschiedenen Anwendungen oder HSMs 112, auf denen u.a. die Smartcard Funktionalität realisiert sind, im Backend 110 zu betreiben und ihre Sicherheitsfunktionen unter Einbindung eines HardwareSicherheitsmoduls 123 im Endgerät lokal oder stationär nutzbar zu machen ohne hierfür eine komplexe Anwendung für das jeweilige Endgerät 120 entwickeln, evaluieren und zertifizieren zu müssen. Zusätzlich können über dieses Secure System 100 auch Secure Credentials, Secure Token oder andere sicherheitsrelevante Funktionen dem Endgerät 120 bereitgestellt werden.

Die Sicherheitsfunktionen im Backend 110 werden dabei durch Smartcards 117 in einer Private-Smartcard-Box 116 im privaten Bereich des Nutzers 121 oder durch ein HSM 112 im Rechenzentrum 110 bereitgestellt und können nur über ein Gateway 113 mit einem Gatekeeper erreicht werden. Das Gateway 113 sorgt dabei dafür, dass nur registrierte Endgeräte wie z.B. Smartphones 120 bzw. registrierte Sicherheitsmodule 123 in den Smartphones 120 mit der Private-Smartcard-Box 116 oder dem HSM 112 kommunizieren können. Die Sicherheitskomponenten werden zudem durch zusätzliche Firewalls und nicht routingfähige IP-Adressen gegen Angriffe von außen geschützt.

Der Kontakt zwischen dem Endgerät/Smartphone 120 und der Smartcard 117 bzw. dem HSM 112 wird im Unterschied zum HCE-Ansatz nicht durch eine integrierte Funktion im Smartphone-Betriebssystem sondern mittels eines Secure-Authentification-Protocols 122 auf dem Smartphone 120 (oder einem anderen Endgerät) hergestellt. Im Gegensatz zu HCE bedient sich das System 100 hier der Sicherheit eines Hardwaresicherheitsmoduls 123 im mobilen Endgerät 120 lediglich für die Authentifikation und dem Aufbau eines sicheren Kanals zwischen Endgerät 120 und dem SM 117, 112 im Backend 110. Bei der Sicherheit auf dem Endgerät 120 kann es sich um ein Secure-Element 123 im Smartphone 120 selbst, eine UICC, eine eSIM oder eine Secure µSD-Karte handeln, d.h. das zur Authentifikation mit dem Backend 110 erforderliche Schlüsselmaterial wird sicher in einer ggf. evaluierten und zertifizierten Hardware 123 gespeichert.

Diese Verfahren hat den Vorteil, dass beliebig viele Sicherheitselemente mit unterschiedlichsten Funktionalitäten über das Backend 110 auf den Endgeräten 120 zur Verfügung stehen und die meist in der Funktionalität und dem Speicherplatz beschränkten Sicherheitsanker der Endgeräte 120 nur zur Authentifikation gegenüber dem Backend 110 und damit gegenüber den SMs 117, 112 genutzt werden.

Weiterhin ist zu betonen, dass es sich bei den SMs 117, 112 im Backend nicht um virtuelle Smartcards, also in Software simulierte Sicherheitselemente handelt, sondern tatsächlich Smartcard Funktionalität und Technologie aus dem Backend 110 bereitgestellt wird, um damit auch den höchsten Sicherheitsanforderungen gerecht werden zu können. Zudem wird die Integration in ein bestehendes System vereinfacht, da sich die SMs 117, 112 identisch zu einer im System eingesetzten Smartcard verhält. Ergänzend können jedoch auch virtuelle Smartcards oder andere Funktionalitäten über den authentisierten und abgesicherten Kanal aus dem Backend 110 für Endgeräte 120 bereitgestellt werden.

Der Nutzer 121 authentifiziert sich über das Secure-Authentification-Protocol 122, das z.B. über eine App gesteuert wird, gegenüber seinem Private-Smartcard-System 116, 117 und wählt die gewünschte Smartcard 117 oder die Sicherheitsanwendung aus seiner Private-Smartcard-Box 116 oder dem HSM 112 aus, die er mit Hilfe des Endgeräts 120 nutzen möchte.

Will der Nutzer 121 beispielsweise eine Bezahlfunktion mit einer in seiner Private-Smartcard-Box 116 befindlichen Payment-Karte 117 im Supermarkt durchführen, dann authentisiert er sich über das Secure-Authentification-Protocol 122 gegenüber der Private-Smartcard-Box 116, wählt seine Payment-Karte 117 aus und legt das N FC fähige 128 NFC-Smartphone 120 auf den kontaktlosen Leser 132 an der Kasse des Supermarkts. Die Bezahlanwendung 130 im Supermarkt kommuniziert dann über das Smartphone 120 mittels einer gesicherten Verbindung zur Private-Smartcard-Box 116 direkt mit der Paymentkarte 117 in der Private-Smartcard-Box 116 des Nutzers 121. Auf gleiche Art und Weise können verschiedene Sicherheitsanwendungen wie Zutrittskontrollsysteme für einen größeren Mitarbeiterstamm zentral auf einem HSM 112 verwaltet und über das Smartphone 120 angesteuert werden. Die Möglichkeiten sind dabei nahezu unbegrenzt, da HSMs beliebig skalierbar sind und die jeweiligen Anwendungen nur einmalig entwickelt, evaluiert und zertifiziert werden müssen und mit nahezu jedem Smartphone oder Endgerät 120 mit beliebigem OS und dem entsprechenden, einfach strukturierten Secure-Authentification-Protocol 122 nutzbar sind.

Der wesentliche Vorteil dieses Systems liegt darin, dass die Sicherheit der Smartcard 117 oder des HSM 112 ohne den Verzicht auf Hardware-Sicherheit uneingeschränkt für die jeweilige Anwendung zur Verfügung steht, da die Smartcard 117 oder HSM 112 nicht an das Endgerät 120 angepasst werden muss. Gleichzeitig ermöglicht der Gatekeeper 113 den Schutz der Sicherheitskomponente von außen, d.h. ein Angreifer muss sich bei einem möglichen Angriffsversuch auf die Sicherheitskomponente nicht der beschränkten Hardwarekapazität der Endgeräte 120 sondern der Leistungsfähigkeit des Gatekeepers 113 stellen, der zudem größere Angriffswellen besser als die Endgeräte 120 alleine erkennen kann.

Das Endgerät 120 selbst verlängert quasi nur die Kommunikationsschnittstelle der Smartcard 117 oder des HSM 112 auf sichere Art und Weise und muss daher nicht im Zuge der Zertifizierung betrachtet werden. Eine Änderung am Betriebssystem des Endgerätes 120 hätte ggf. lediglich Auswirkungen auf das einfach strukturierte und nur über einen Authentifikationsmechanismus verfügendes Secure-Authentification-Protocol 122 im Zusammenspiel mit dem Sicherheitselement 123 des Endgerätes 120, nicht aber auf die verschiedenen Karten 117 in der Private-Smartcard-Box 116 oder auf dem HSM 112. Die Systemanteile auf den Endgeräten 120 können dabei über SDKs (Software Development Kits) oder integrierbare Funktionsbausteine realisiert oder bei Bedarf angepasst werden.

Das hier vorgestellte Konzept macht es möglich, den immer steigenden Sicherheitsanforderungen auf unterschiedlichsten Endgeräten über ein einfaches, kostengünstiges und zukunftssicheres Security System mit zentralen Sicherheitselementen gerecht zu werden.

Gleichzeitig können aufgrund der Architektur und den eingesetzten Sicherheitselementen verschiedene Sicherheitsniveaus in mobilen und stationären Endgeräten erreicht werden.

Die in den Endgeräten 120 verfügbaren Sicherheitselemente 123 sind in der Funktionalität und im Speicherplatz begrenzt und werden daher in diesem Security System 100 auch nur für den sicherheitsrelevanten Aufbau eines authentisierten und verschlüsselten Kanals zwischen Endgerät 120 und SM 117, 112 im Backend 110 genutzt. Damit stehen einem Endgerät 120 theoretisch unbegrenzt viele und zum Zeitpunkt des Rollouts evtl. noch nicht bekannte Sicherheitsfunktionen zur Verfügung.

Weiterer Vorteil eines solchen Security Systems 100 mit zentralen Sicherheitselementen 117, 112 besteht in der Updatefähigkeit der Sicherheitselemente 117, 112. Muss beispielsweise eine Sicherheitsfunktion oder ein Algorithmus im SM 117, 112 ersetzt werden, so erfolgt dies zentral. Die Endgeräte 120 sind davon nicht betroffen, sofern das Authentication Protocol 122 oder das Sicherheitselement 123 des Endgeräts 120 selbst nicht betroffen ist.

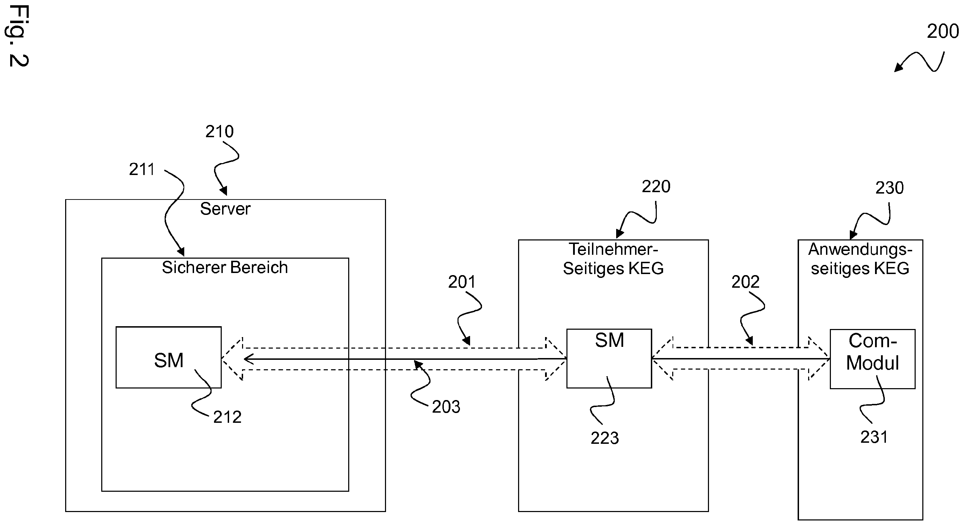

Fig. 2 zeigt ein Blockschaltbild des Aufbaus eines Sicherheitssystems 200 gemäß einer beispielhaften zweiten Ausführungsform. Das Sicherheitssystem 200 umfasst einen Server 210 mit einem gesicherten Bereich 211, der beispielsweise dem Server 110 bzw. Backend aus Figur 1 mit gesichertem Bereich 111 entsprechen kann. Das Sicherheitssystem 200 umfasst ein teilnehmerseitiges Kommunikationsendgerät 220, das beispielsweise dem Smartphone 120 aus Figur 1 entsprechen kann. Das Sicherheitssystem 200 umfasst ferner ein anwendungsseitiges Kommunikationsendgerät 230, das beispielsweise dem externen Gerät 130 aus Figur 1 entsprechen kann.

In dem Server 210 mit gesichertem Bereich 211 sind zumindest ein serverseitiges physikalisches Sicherheitsmodul (SM) 212, z.B. eine Smartcard und/oder ein Hardwaresicherheitsmodul (HSM), mechanisch und kommunikationstechnisch montierbar. Kommunikationstechnisch bedeutet, dass eine Kommunikation zwischen beiden Komponenten nach der Montage hergestellt werden kann, z.B. eine elektrische und/oder optische Kommunikation. Das zumindest eine serverseitige physikalische Sicherheitsmodul 212 ist ausgebildet, eine elektronische Anwendung auszuführen.

Das teilnehmerseitige Kommunikationsendgerät 220 mit dem teilnehmerseitigen SM 223 ist ausgebildet, unter Verwendung eines Authentifizierungsprotokolls einen ersten Kommunikationskanal 201 zwischen dem teilnehmerseitigen Kommunikationsendgerät 220 und dem zumindest einen serverseitigen physikalischen SM 212 aufzubauen. Das teilnehmerseitige SM 223 kann dem SM 123 im Smartphone 120 aus Figur 1 entsprechen. Das Authentifizierungsprotokoll kann in einer sicheren Authentifizierungs-App 122 des Smartphones 120 wie in Figur 1 dargestellt ausgeführt werden.

Das serverseitige physikalische SM 212 kann einer der Smartcards 117 oder dem HSM 112 im gesicherten Bereich 111 des Servers 110 aus Figur 1 entsprechen.

Das anwendungsseitige Kommunikationsendgerät 230 umfasst ein Kommunikationsmodul 231, das ausgebildet ist, mit dem teilnehmerseitigen Kommunikationsendgerät 220 zu interagieren, um einen zweiten Kommunikationskanal 202 zwischen dem anwendungsseitigen Kommunikationsendgerät 230 und dem teilnehmerseitigen Kommunikationsendgerät 220 aufzubauen, und über den zweiten Kommunikationskanal 202 und den ersten Kommunikationskanal 201 das zumindest eine serverseitige physikalische Sicherheitsmodul 212 anzuweisen 203, die elektronische Anwendung auszuführen.

Das teilnehmerseitige Kommunikationsendgerät 220 kann eine Teilnehmerschnittstelle 122 umfassen, z.B. die sichere Authentifizierungs-App 122 des Smartphones 120 wie in Figur 1 dargestellt, die ausgebildet ist, eine Authentisierung des Teilnehmers 121 zu erfassen und an das teilnehmerseitige SM 223 weiterzuleiten. Das teilnehmerseitige SM 223 kann ausgebildet sein, den ersten Kommunikationskanal 201 basierend auf der Authentisierung des Teilnehmers 121 unter Verwendung des Authentifizierungsprotokolls aufzubauen.

In dem gesicherten Bereich 211 des Servers 210 kann eine Mehrzahl von serverseitigen physikalischen SMs 212 montierbar sein, z.B. SMs 117 wie in Fig. 1 dargestellt. Jedem der serverseitigen physikalischen SMs 117 kann eine entsprechende Identifikation zugeordnet sein. Die Teilnehmerschnittstelle 122 kann ausgebildet sein, eine Eingabe des Teilnehmers 121 mit einer Identifizierung eines bestimmten serverseitigen physikalischen SMs 117, 112 zu erfassen und an das teilnehmerseitige SM 123 weiterzuleiten. Das teilnehmerseitige SM kann ferner ausgebildet sein, den ersten Kommunikationskanal 201 zu dem serverseitigen physikalischen SM 212 aufzubauen, dessen Identifikation der Identifizierung aus der Eingabe des Teilnehmers 121 entspricht.

Das Sicherheitssystem 200 kann ferner ein Gateway 113 zum Eintritt in den gesicherten Bereich 211 des Servers 210 umfassen, beispielsweise ein Gateway 113 mit Gatekeeper wie in Fig. 1 dargestellt. Der Gatekeeper ist ausgebildet, nur registrierten teilnehmerseitigen Kommunikationsendgeräten 220 den Zugang über das Gateway 113 in den gesicherten Bereich 211 des Servers 210 zu ermöglichen, um den ersten Kommunikationskanal 201 mit dem zumindest einen serverseitigen physikalischen SM 212 aufzubauen.

Das serverseitige physikalische Sicherheitsmodul 210 kann z.B. nur über eine nicht routingfähige IP Adresse kommunikationstechnisch erreichbar sein, um damit die Sicherheit zu erhöhen.

Das teilnehmerseitige Kommunikationsendgerät 220 kann eine Nahbereichskommunikationsschnittstelle 128, wie z.B. in Fig. 1 dargestellt, umfassen, die ausgelegt ist, mit einer entsprechenden Nahbereichskommunikationsschnittstelle 132 des anwendungsseitigen Kommunikationsendgeräts 230 zu interagieren, um den zweiten Kommunikationskanal 202 aufzubauen.

Das teilnehmerseitige Kommunikationsendgerät 220 kann beispielsweise ein zertifiziertes Hardware-Element 123 umfassen, wie in Fig. 1 dargestellt, insbesondere ein Secure Element, eine UICC, eine eSIM oder eine Secure µSD-Karte, das ausgebildet ist, Schlüsselmaterial zur Ausführung des Authentifizierungsprotokolls 122 sicher aufzubewahren.

Das Sicherheitssystem 200 kann ferner eine Box 116 umfassen, wie z.B. in Fig. 1 dargestellt, die im gesicherten Bereich 211 des Servers 210 austauschbar montierbar ist, und ausgebildet ist, eine Mehrzahl von Smartcards 117 aufzunehmen und kommunikationstechnisch zugänglich zu machen, wie oben zu Fig. 1 beschrieben. Jede der Smartcards 117 in der Box 116 kann austauschbar montierbar sein oder austauschbar montiert sein.

Das zumindest eine serverseitige physikalische SM 212 kann ausgebildet sein, dem teilnehmerseitigen Kommunikationsendgerät 220 über den ersten Kommunikationskanal 201 sicherheitsrelevante Funktionen, insbesondere virtuelle Smart Cards, Secure Credentials und/oder Secure Tokens bereitzustellen.

Der Server 210 kann ausgebildet ist, einen Update des zumindest einen serverseitigen physikalischen Sicherheitsmoduls 212 auszuführen, um eine Sicherheitsfunktion und/oder einen Algorithmus auf dem zumindest einen serverseitigen physikalischen SM 212 zu erneuern.

Fig. 2 zeigt auch ein weiteres Sicherheitssystem, das aus dem Server 210 und dem teilnehmerseitigen Kommunikationsendgerät 220 besteht, jedoch nicht aus dem anwendungsseitigen Kommunikationsendgerät 230. Ein solches Sicherheitssystem umfasst den oben beschriebenen Server 210 mit dem gesicherten Bereich 211, in dem zumindest ein serverseitiges physikalisches Sicherheitsmodul 212, insbesondere eine Smartcard und/oder ein Hardwaresicherheitsmodul (HSM), mechanisch und kommunikationstechnisch montierbar sind, wobei das zumindest eine serverseitige physikalische Sicherheitsmodul 212 ausgebildet ist, eine elektronische Anwendung auszuführen.

Ein solches Sicherheitssystem umfasst ferner das oben beschriebene teilnehmerseitige Kommunikationsendgerät 220 mit einem teilnehmerseitigen physikalischen SM 223, das ausgebildet ist, unter Verwendung eines Authentifizierungsprotokolls einen ersten Kommunikationskanal 201 zwischen dem teilnehmerseitigen Kommunikationsendgerät 220 und dem zumindest einen serverseitigen physikalischen SM 212 aufzubauen.

Das teilnehmerseitige Kommunikationsendgerät 220 umfasst ferner ein anwendungsseitiges Kommunikationsmodul (nicht gezeigt in Fig. 2), das ausgebildet ist, mit einem anwendungsseitigen Kommunikationsendgerät 230 zu interagieren, um einen zweiten Kommunikationskanal 202 zwischen dem anwendungsseitigen Kommunikationsendgerät 230 und dem teilnehmerseitigen Kommunikationsendgerät 220 aufzubauen, und über den zweiten Kommunikationskanal 202 und den ersten Kommunikationskanal 201 das zumindest eine serverseitige physikalische Sicherheitsmodul 212 anzuweisen 203, die elektronische Anwendung auszuführen.

Das teilnehmerseitige Kommunikationsendgerät 220 umfasste eine Nahbereichskommunikationsschnittstelle 128, wie oben zu Figur 1 bereits beschrieben, die ausgelegt ist, mit einer entsprechenden Nahbereichskommunikationsschnittstelle 132 des anwendungsseitigen Kommunikationsendgeräts 230 zu interagieren, um den zweiten Kommunikationskanal 202 aufzubauen.

Der oben beschriebene Sicherheitsserver 210 dient zum sicheren Ausführen einer elektronischen Anwendung. Der Sicherheitsserver 210 umfasst einen gesicherten Bereich 211, in dem zumindest ein serverseitiges physikalisches Sicherheitsmodul 212, insbesondere eine Smartcard 117 und/oder ein Hardwaresicherheitsmodul 112, mechanisch und kommunikationstechnisch montierbar sind, z.B. einsteckbar, so dass sich elektrische Kontakte berühren. Das zumindest eine serverseitige physikalische Sicherheitsmodul 212 ist ausgebildet, eine elektronische Anwendung auszuführen.

Das zumindest eine serverseitige physikalische Sicherheitsmodul 212 ist ausgebildet, unter Verwendung eines Authentifizierungsprotokolls einen ersten Kommunikationskanal 201 zwischen einem physikalischen SM 223 eines teilnehmerseitigen Kommunikationsgeräts 220 und dem zumindest einen serverseitigen physikalischen SM 212 aufzubauen und die elektronische Anwendung basierend auf einer über den ersten Kommunikationskanal 201 empfangenen Anweisung 203 auszuführen.

Der Sicherheitsserver 210 kann ein Gateway 113 zum Eintritt in den gesicherten Bereich 111 des Servers 110 umfassen, wie z.B. in Figur 1 dargestellt. Das Gateway 113 kann einen Gatekeeper umfassen, der ausgebildet ist, nur registrierten teilnehmerseitigen Kommunikationsendgeräten 220 den Zugang über das Gateway 113 in den gesicherten Bereich 211 des Servers 210 zu ermöglichen, um den ersten Kommunikationskanal 201 mit dem zumindest einen serverseitigen physikalischen SM 212 aufzubauen.

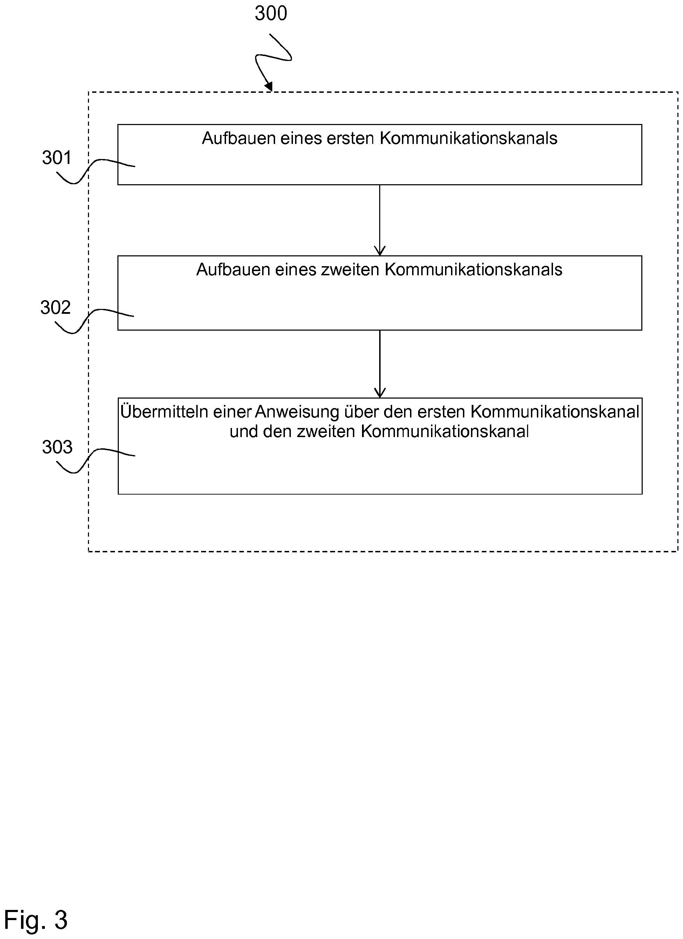

Fig. 3 zeigt eine schematische Darstellung eines Verfahrens 300 zur sicheren Ausführung einer elektronischen Anwendung, beispielsweise einer App oder elektronischen Anwendung wie oben zu den Figuren 1 und 2 beschrieben, gemäß einer beispielhaften Ausführungsform.

Das Verfahren 300 umfasst einen ersten Schritt 301: Aufbauen eines ersten Kommunikationskanals, z.B. eines ersten Kommunikationskanals 201 wie in Figur 2 dargestellt, zwischen einem physikalischen Sicherheitsmodul (SM) eines teilnehmerseitigen Kommunikationsendgeräts, z.B. eines SM 223 wie in Fig. 2 dargestellt oder eines SM 123 wie in Fig. 1 dargestellt, und einem serverseitigen physikalischen Sicherheitsmodul (SM), z.B. eines SM 212 wie in Fig. 2 dargestellt oder eines SM 117 oder eines HSM 112 wie in Fig. 1 dargestellt, unter Verwendung eines Authentifizierungsprotokolls, wobei das serverseitige physikalische SM in einem gesicherten Bereich 111 eines Servers 110 mechanisch und kommunikationstechnisch montierbar ist, beispielsweise wie in Fig. 1 dargestellt.

Das Verfahren 300 umfasst einen zweiten Schritt 302: Aufbauen eines zweiten Kommunikationskanals, z.B. eines zweiten Kommunikationskanals 202 wie in Figur 2 dargestellt, zwischen einem anwendungsseitigen Kommunikationsendgerät und dem teilnehmerseitigen Kommunikationsendgerät, z.B. wie in den Figuren 1 und 2 dargestellt.

Das Verfahren 300 umfasst einen dritten Schritt 303: Übermitteln einer Anweisung des anwendungsseitigen Kommunikationsendgeräts über den zweiten Kommunikationskanal und den ersten Kommunikationskanal an das serverseitige physikalische Sicherheitsmodul, eine elektronische Anwendung auszuführen, wie z.B. in Figur 2 dargestellt.

Ein Aspekt der Erfindung umfasst auch ein Computerprogrammprodukt, das direkt in den internen Speicher eines digitalen Computers geladen werden kann und Softwarecodeabschnitte umfasst, mit denen die zu Figuren 1 und 2 beschriebenen Schritte bzw. das zu Figur 3 beschriebene Verfahren 300 ausgeführt werden kann, wenn das Produkt auf einem Computer läuft. Das Computerprogrammprodukt kann auf einem computergeeigneten Medium gespeichert sein und computerlesbare Programmittel umfassen, die einen Computer veranlassen, die zu Figuren 1 und 2 beschriebenen Schritte bzw. das zu Figur 3 beschriebene Verfahren 300 auszuführen.

Der Computer kann ein PC sein, beispielsweise ein PC eines Computernetzwerks. Der Computer kann als ein Chip, ein ASIC, ein Mikroprozessor oder ein Signalprozessor realisiert sein und in einem Computernetzwerk, beispielsweise als Prozessor einer Basisstation in einem gebäudeinternen Kommunikationsnetzwerk wie in den Figuren 1 bis 5 beschrieben, oder in einem gebäudeexternen Kommunikationsnetzwerk angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

### Bezugszeichenliste

- 100:: Sicherheitssystem
- 110:: Server
- 111:: gesicherter Bereich des Servers
- 112:: Hardware-Sicherheitsmodul (HSM)
- 113:: Gateway mit Gatekeeper
- 114:: HSM
- 115:: Home Zone, Heim Zone
- 116:: Smartcard Box, Box für SMs
- 117:: SD Karten
- 118:: Router
- 120:: Smartphone bzw. teilnehmerseitiges Kommunikationsendgerät
- 121:: Nutzer, Teilnehmer
- 122:: Sichere Authentifizierungs Anwendung (App) bzw. Teilnehmerschnittstelle
- 123:: Sicherheitsmodul (SM) oder HSM
- 124:: Glasses bzw. intelligente Brille
- 125:: SM, Sicherheitsmodul
- 126:: Wearable bzw. tragbares Gerät
- 127:: SM, Sicherheitsmodul
- 128:: Nahfeldkommunikations- (NfC) Schnittstelle auf Teilnehmerseite
- 129:: Bluetooth-Kommunikationsschnittstelle auf Teilnehmerseite
- 134:: sonstige Kommunikationsschnittstelle(n) auf Teilnehmerseite
- 130:: externes Gerät, anwendungsseitiges Kommunikationsgerät
- 131:: lokaler Shop, lokale Einrichtung nur Nutzung der Sicherheitsfunktionen
- 132:: Nahfeldkommunikations- (NfC) Schnittstelle auf Anwendungsseite
- 133:: Bluetooth-Kommunikationsschnittstelle auf Anwendungsseite
- 135:: sonstige Kommunikationsschnittstelle(n) auf Anwendungsseite
- 140:: Internetbereich
- 141:: externes Kommunikationsnetz, z.B. Internet
- 150:: Zentrales Schlüsselmanagement, PKI

- 200:: Sicherheitssystem
- 210:: Server
- 211:: gesicherter Bereich des Servers
- 212:: physikalisches Sicherheitsmodul (SM)
- 201:: erster Kommunikationskanal
- 202:: zweiter Kommunikationskanal
- 203:: Anweisung, elektronische Anwendung auszuführen
- 220:: Smartphone bzw. teilnehmerseitiges Kommunikationsendgerät
- 223:: Sicherheitsmodul (SM) oder HSM
- 230:: externes Gerät, anwendungsseitiges Kommunikationsgerät
- 231:: lokaler Shop, lokale Einrichtung nur Nutzung der Sicherheitsfunktionen

- 300:: Verfahren zur sicheren Ausführung einer elektronischen Anwendung
- 301:: 1. Schritt
- 302:: 2. Schritt
- 304:: 3. Schritt

## Patentansprüche

1. Sicherheitssystem (100, 200) zur Ausführung einer elektronischen Anwendung, mit:
einem Server (210) mit einem gesicherten Bereich (211), in dem zumindest ein serverseitiges physikalisches Sicherheitsmodul (SM) (212), insbesondere eine Smartcard und/oder ein Hardwaresicherheitsmodul (HSM), mechanisch und kommunikationstechnisch montierbar sind,
wobei das zumindest eine serverseitige physikalische Sicherheitsmodul (212) ausgebildet ist, eine elektronische Anwendung auszuführen;
einem teilnehmerseitigen Kommunikationsendgerät (220) mit einem teilnehmerseitigen SM (223), das ausgebildet ist, unter Verwendung eines Authentifizierungsprotokolls einen ersten Kommunikationskanal (201) zwischen dem teilnehmerseitigen Kommunikationsendgerät (220) und dem zumindest einen serverseitigen physikalischen SM (212) aufzubauen; und
einem anwendungsseitigen Kommunikationsendgerät (230) mit einem Kommunikationsmodul (231), das ausgebildet ist, mit dem teilnehmerseitigen Kommunikationsendgerät (220) zu interagieren, um einen zweiten Kommunikationskanal (202) zwischen dem anwendungsseitigen Kommunikationsendgerät (230) und dem teilnehmerseitigen Kommunikationsendgerät (220) aufzubauen, und über den zweiten Kommunikationskanal (202) und den ersten Kommunikationskanal (201) das zumindest eine serverseitige physikalische Sicherheitsmodul (212) anzuweisen (203), die elektronische Anwendung auszuführen.

2. Sicherheitssystem (100, 200) nach Anspruch 1,
wobei das teilnehmerseitige Kommunikationsendgerät (220, 120) eine Teilnehmerschnittstelle (122) umfasst, die ausgebildet ist, eine Authentisierung des Teilnehmers (121) zu erfassen und an das teilnehmerseitige SM (123) weiterzuleiten; und
wobei das teilnehmerseitige SM ausgebildet ist, den ersten Kommunikationskanal (201) basierend auf der Authentisierung des Teilnehmers (121) unter Verwendung des Authentifizierungsprotokolls aufzubauen.

3. Sicherheitssystem (100, 200) nach Anspruch 2,
wobei in dem gesicherten Bereich (111) des Servers (110) eine Mehrzahl von serverseitigen physikalischen SMs (117) montierbar ist,
wobei jedem der serverseitigen physikalischen SMs (117) eine entsprechende Identifikation zugeordnet ist,
wobei die Teilnehmerschnittstelle (122) ausgebildet ist, eine Eingabe des Teilnehmers (121) mit einer Identifizierung eines bestimmten serverseitigen physikalischen SMs (117, 112) zu erfassen und an das teilnehmerseitige SM (123) weiterzuleiten; und
wobei das teilnehmerseitige SM ausgebildet ist, den ersten Kommunikationskanal (201) zu dem serverseitigen physikalischen SM (212, 117, 112) aufzubauen, dessen Identifikation der Identifizierung aus der Eingabe des Teilnehmers (121) entspricht.

4. Sicherheitssystem (100, 200) nach einem der vorstehenden Ansprüche, mit
einem Gateway (113) zum Eintritt in den gesicherten Bereich (111) des Servers (110),
wobei das Gateway (113) einen Gatekeeper umfasst, der ausgebildet ist, nur registrierten teilnehmerseitigen Kommunikationsendgeräten (120) den Zugang über das Gateway (113) in den gesicherten Bereich (111) des Servers (110) zu ermöglichen, um den ersten Kommunikationskanal (201) mit dem zumindest einen serverseitigen physikalischen SM (212) aufzubauen.

5. Sicherheitssystem (100, 200) nach einem der vorstehenden Ansprüche,
wobei das serverseitige physikalische Sicherheitsmodul (SM) (210) nur über eine nicht routingfähige IP Adresse kommunikationstechnisch erreichbar ist.

6. Sicherheitssystem (100, 200) nach einem der vorstehenden Ansprüche,
wobei das teilnehmerseitige Kommunikationsendgerät (220, 120) eine Nahbereichskommunikationsschnittstelle (128) umfasst, die ausgelegt ist, mit einer entsprechenden Nahbereichskommunikationsschnittstelle (132) des anwendungsseitigen Kommunikationsendgeräts (130) zu interagieren, um den zweiten Kommunikationskanal (202) aufzubauen.

7. Sicherheitssystem (100, 200) nach einem der vorstehenden Ansprüche,
wobei das teilnehmerseitige Kommunikationsendgerät (120) ein zertifiziertes Hardware-Element (123) umfasst, insbesondere ein Secure Element, eine UICC, eine eSIM oder eine Secure µSD-Karte, das ausgebildet ist, Schlüsselmaterial zur Ausführung des Authentifizierungsprotokolls sicher aufzubewahren.

8. Sicherheitssystem (100, 200) nach einem der vorstehenden Ansprüche, mit
einer Box (116), die im gesicherten Bereich (111) des Servers (110) austauschbar montierbar ist, und ausgebildet ist, eine Mehrzahl von Smartcards (117) aufzunehmen und kommunikationstechnisch zugänglich zu machen,
wobei jede der Smartcards (117) in der Box (116) austauschbar montierbar ist.

9. Sicherheitssystem (100, 200) nach einem der vorstehenden Ansprüche,
wobei das zumindest eine serverseitige physikalische SM (212) ausgebildet ist, dem teilnehmerseitigen Kommunikationsendgerät (220) über den ersten Kommunikationskanal (201) sicherheitsrelevante Funktionen, insbesondere virtuelle Smart Cards, Secure Credentials und/oder Secure Tokens bereitzustellen.

10. Sicherheitssystem (100, 200) nach einem der vorstehenden Ansprüche,
wobei der Server (210) ausgebildet ist, einen Update des zumindest einen serverseitigen physikalischen Sicherheitsmoduls (212) auszuführen, um eine Sicherheitsfunktion und/oder einen Algorithmus auf dem zumindest einen serverseitigen physikalischen SM (212) zu erneuern.

11. Sicherheitssystem (210, 220) zur Ausführung einer elektronischen Anwendung, mit:
einem Server (210) mit einem gesicherten Bereich (211), in dem zumindest ein serverseitiges physikalisches Sicherheitsmodul (SM) (212), insbesondere eine Smartcard und/oder ein Hardwaresicherheitsmodul (HSM), mechanisch und kommunikationstechnisch montierbar sind,
wobei das zumindest eine serverseitige physikalische Sicherheitsmodul (212) ausgebildet ist, eine elektronische Anwendung auszuführen; und
einem teilnehmerseitigen Kommunikationsendgerät (220) mit:
einem teilnehmerseitigen physikalischen SM (223), das ausgebildet ist, unter Verwendung eines Authentifizierungsprotokolls einen ersten Kommunikationskanal (201) zwischen dem teilnehmerseitigen Kommunikationsendgerät (220) und dem zumindest einen serverseitigen physikalischen SM (212) aufzubauen; und
einem anwendungsseitigen Kommunikationsmodul, das ausgebildet ist, mit einem anwendungsseitigen Kommunikationsendgerät (230) zu interagieren, um einen zweiten Kommunikationskanal (202) zwischen dem anwendungsseitigen Kommunikationsendgerät (230) und dem teilnehmerseitigen Kommunikationsendgerät (220) aufzubauen, und über den zweiten Kommunikationskanal (202) und den ersten Kommunikationskanal (201) das zumindest eine serverseitige physikalische Sicherheitsmodul (212) anzuweisen (203), die elektronische Anwendung auszuführen.

12. Sicherheitssystem (210, 220) nach Anspruch 11,
wobei das teilnehmerseitige Kommunikationsendgerät (220, 120) eine Nahbereichskommunikationsschnittstelle (128) umfasst, die ausgelegt ist, mit einer entsprechenden Nahbereichskommunikationsschnittstelle (132) des anwendungsseitigen Kommunikationsendgeräts (230, 130) zu interagieren, um den zweiten Kommunikationskanal (202) aufzubauen.

13. Sicherheitsserver (210, 110) zum sicheren Ausführen einer elektronische Anwendung, mit:
einem gesicherten Bereich (111, 211), in dem zumindest ein serverseitiges physikalisches Sicherheitsmodul (SM) (212), insbesondere eine Smartcard (117) und/oder ein Hardwaresicherheitsmodul (HSM) (112), mechanisch und kommunikationstechnisch montierbar sind,
wobei das zumindest eine serverseitige physikalische Sicherheitsmodul (212) ausgebildet ist, eine elektronische Anwendung auszuführen;
wobei das zumindest eine serverseitige physikalische Sicherheitsmodul (212) ausgebildet ist, unter Verwendung eines Authentifizierungsprotokolls einen ersten Kommunikationskanal (201) zwischen einem physikalischen SM (223, 123) eines teilnehmerseitigen Kommunikationsgeräts (220) und dem zumindest einen serverseitigen physikalischen SM (212) aufzubauen und die elektronische Anwendung basierend auf einer über den ersten Kommunikationskanal (201) empfangenen Anweisung (203) auszuführen.

14. Sicherheitsserver (210, 110) nach Anspruch 13, mit
einem Gateway (113) zum Eintritt in den gesicherten Bereich (111) des Servers (110),
wobei das Gateway (113) einen Gatekeeper umfasst, der ausgebildet ist, nur registrierten teilnehmerseitigen Kommunikationsendgeräten (120) den Zugang über das Gateway (113) in den gesicherten Bereich (111) des Servers (110) zu ermöglichen, um den ersten Kommunikationskanal (201) mit dem zumindest einen serverseitigen physikalischen SM (212) aufzubauen.

15. Verfahren (300) zur sicheren Ausführung einer elektronischen Anwendung, mit folgenden Schritten:
Aufbauen (301) eines ersten Kommunikationskanals (201) zwischen einem physikalischen Sicherheitsmodul (SM) (223) eines teilnehmerseitigen Kommunikationsendgeräts (220) und einem serverseitigen physikalischen Sicherheitsmodul (SM) (212) unter Verwendung eines Authentifizierungsprotokolls, wobei das serverseitige physikalische SM (212) in einem gesicherten Bereich (211) eines Servers (210) mechanisch und kommunikationstechnisch montierbar ist;
Aufbauen (302) eines zweiten Kommunikationskanals (202) zwischen einem anwendungsseitigen Kommunikationsendgerät (230) und dem teilnehmerseitigen Kommunikationsendgerät (220); und
Übermitteln (303) einer Anweisung (203) des anwendungsseitigen Kommunikationsendgeräts (230) über den zweiten Kommunikationskanal (202) und den ersten Kommunikationskanal (201) an das serverseitige physikalische Sicherheitsmodul (212), eine elektronische Anwendung auszuführen.

## Geänderte Patentansprüche

### Geänderte Patentansprüche gemäss Regel 137(2) EPÜ.

1. Sicherheitssystem (100, 200) zur Ausführung einer elektronischen Anwendung, mit:
einem Server (210) mit einem gesicherten Bereich (211), in dem zumindest ein serverseitiges physikalisches Sicherheitsmodul (SM) (212), insbesondere eine Smartcard und/oder ein Hardwaresicherheitsmodul (HSM), mechanisch und kommunikationstechnisch montierbar sind,
wobei das zumindest eine serverseitige physikalische Sicherheitsmodul (212) ausgebildet ist, eine elektronische Anwendung auszuführen;
einem teilnehmerseitigen Kommunikationsendgerät (220) mit einem teilnehmerseitigen SM (223), das ausgebildet ist, unter Verwendung eines Authentifizierungsprotokolls einen ersten Kommunikationskanal (201) zwischen dem teilnehmerseitigen Kommunikationsendgerät (220) und dem zumindest einen serverseitigen physikalischen SM (212) aufzubauen;
einem anwendungsseitigen Kommunikationsendgerät (230) mit einem Kommunikationsmodul (231), das ausgebildet ist, mit dem teilnehmerseitigen Kommunikationsendgerät (220) zu interagieren, um einen zweiten Kommunikationskanal (202) zwischen dem anwendungsseitigen Kommunikationsendgerät (230) und dem teilnehmerseitigen Kommunikationsendgerät (220) aufzubauen, und über den zweiten Kommunikationskanal (202) und den ersten Kommunikationskanal (201) das zumindest eine serverseitige physikalische Sicherheitsmodul (212) anzuweisen (203), die elektronische Anwendung auszuführen; und
einem Gateway (113) zum Eintritt in den gesicherten Bereich (111) des Servers (110),
wobei das Gateway (113) einen Gatekeeper umfasst, der ausgebildet ist, nur registrierten teilnehmerseitigen Kommunikationsendgeräten (120) den Zugang über das Gateway (113) in den gesicherten Bereich (111) des Servers (110) zu ermöglichen, um den ersten Kommunikationskanal (201) mit dem zumindest einen serverseitigen physikalischen SM (212) aufzubauen.

2. Sicherheitssystem (100, 200) nach Anspruch 1,
wobei das teilnehmerseitige Kommunikationsendgerät (220, 120) eine Teilnehmerschnittstelle (122) umfasst, die ausgebildet ist, eine Authentisierung des Teilnehmers (121) zu erfassen und an das teilnehmerseitige SM (123) weiterzuleiten; und
wobei das teilnehmerseitige SM ausgebildet ist, den ersten Kommunikationskanal (201) basierend auf der Authentisierung des Teilnehmers (121) unter Verwendung des Authentifizierungsprotokolls aufzubauen.

3. Sicherheitssystem (100, 200) nach Anspruch 2,
wobei in dem gesicherten Bereich (111) des Servers (110) eine Mehrzahl von serverseitigen physikalischen SMs (117) montierbar ist,
wobei jedem der serverseitigen physikalischen SMs (117) eine entsprechende Identifikation zugeordnet ist,
wobei die Teilnehmerschnittstelle (122) ausgebildet ist, eine Eingabe des Teilnehmers (121) mit einer Identifizierung eines bestimmten serverseitigen physikalischen SMs (117, 112) zu erfassen und an das teilnehmerseitige SM (123) weiterzuleiten; und
wobei das teilnehmerseitige SM ausgebildet ist, den ersten Kommunikationskanal (201) zu dem serverseitigen physikalischen SM (212, 117, 112) aufzubauen, dessen Identifikation der Identifizierung aus der Eingabe des Teilnehmers (121) entspricht.

4. Sicherheitssystem (100, 200) nach einem der vorstehenden Ansprüche,
wobei das serverseitige physikalische Sicherheitsmodul (SM) (210) nur über eine nicht routingfähige IP Adresse kommunikationstechnisch erreichbar ist.

5. Sicherheitssystem (100, 200) nach einem der vorstehenden Ansprüche,
wobei das teilnehmerseitige Kommunikationsendgerät (220, 120) eine Nahbereichskommunikationsschnittstelle (128) umfasst, die ausgelegt ist, mit einer entsprechenden Nahbereichskommunikationsschnittstelle (132) des anwendungsseitigen Kommunikationsendgeräts (130) zu interagieren, um den zweiten Kommunikationskanal (202) aufzubauen.

6. Sicherheitssystem (100, 200) nach einem der vorstehenden Ansprüche,
wobei das teilnehmerseitige Kommunikationsendgerät (120) ein zertifiziertes Hardware-Element (123) umfasst, insbesondere ein Secure Element, eine UICC, eine eSIM oder eine Secure µSD-Karte, das ausgebildet ist, Schlüsselmaterial zur Ausführung des Authentifizierungsprotokolls sicher aufzubewahren.

7. Sicherheitssystem (100, 200) nach einem der vorstehenden Ansprüche, mit
einer Box (116), die im gesicherten Bereich (111) des Servers (110) austauschbar montierbar ist, und ausgebildet ist, eine Mehrzahl von Smartcards (117) aufzunehmen und kommunikationstechnisch zugänglich zu machen,
wobei jede der Smartcards (117) in der Box (116) austauschbar montierbar ist.

8. Sicherheitssystem (100, 200) nach einem der vorstehenden Ansprüche,
wobei das zumindest eine serverseitige physikalische SM (212) ausgebildet ist, dem teilnehmerseitigen Kommunikationsendgerät (220) über den ersten Kommunikationskanal (201) sicherheitsrelevante Funktionen, insbesondere virtuelle Smart Cards, Secure Credentials und/oder Secure Tokens bereitzustellen.

9. Sicherheitssystem (100, 200) nach einem der vorstehenden Ansprüche,
wobei der Server (210) ausgebildet ist, einen Update des zumindest einen serverseitigen physikalischen Sicherheitsmoduls (212) auszuführen, um eine Sicherheitsfunktion und/oder einen Algorithmus auf dem zumindest einen serverseitigen physikalischen SM (212) zu erneuern.

10. Sicherheitssystem (210, 220) zur Ausführung einer elektronischen Anwendung, mit:
einem Server (210) mit einem gesicherten Bereich (211), in dem zumindest ein serverseitiges physikalisches Sicherheitsmodul (SM) (212), insbesondere eine Smartcard und/oder ein Hardwaresicherheitsmodul (HSM), mechanisch und kommunikationstechnisch montierbar sind,
wobei das zumindest eine serverseitige physikalische Sicherheitsmodul (212) ausgebildet ist, eine elektronische Anwendung auszuführen;
einem teilnehmerseitigen Kommunikationsendgerät (220) mit:
einem teilnehmerseitigen physikalischen SM (223), das ausgebildet ist, unter Verwendung eines Authentifizierungsprotokolls einen ersten Kommunikationskanal (201) zwischen dem teilnehmerseitigen Kommunikationsendgerät (220) und dem zumindest einen serverseitigen physikalischen SM (212) aufzubauen; und
einem anwendungsseitigen Kommunikationsmodul, das ausgebildet ist, mit einem anwendungsseitigen Kommunikationsendgerät (230) zu interagieren, um einen zweiten Kommunikationskanal (202) zwischen dem anwendungsseitigen Kommunikationsendgerät (230) und dem teilnehmerseitigen Kommunikationsendgerät (220) aufzubauen, und über den zweiten Kommunikationskanal (202) und den ersten Kommunikationskanal (201) das zumindest eine serverseitige physikalische Sicherheitsmodul (212) anzuweisen (203), die elektronische Anwendung auszuführen; und
einem Gateway (113) zum Eintritt in den gesicherten Bereich (111) des Servers (110),
wobei das Gateway (113) einen Gatekeeper umfasst, der ausgebildet ist, nur registrierten teilnehmerseitigen Kommunikationsendgeräten (120) den Zugang über das Gateway (113) in den gesicherten Bereich (111) des Servers (110) zu ermöglichen, um den ersten Kommunikationskanal (201) mit dem zumindest einen serverseitigen physikalischen SM (212) aufzubauen.

11. Sicherheitssystem (210, 220) nach Anspruch 10,
wobei das teilnehmerseitige Kommunikationsendgerät (220, 120) eine Nahbereichskommunikationsschnittstelle (128) umfasst, die ausgelegt ist, mit einer entsprechenden Nahbereichskommunikationsschnittstelle (132) des anwendungsseitigen Kommunikationsendgeräts (230, 130) zu interagieren, um den zweiten Kommunikationskanal (202) aufzubauen.

12. Sicherheitsserver (210, 110) zum sicheren Ausführen einer elektronische Anwendung, mit:
einem gesicherten Bereich (111, 211), in dem zumindest ein serverseitiges physikalisches Sicherheitsmodul (SM) (212), insbesondere eine Smartcard (117) und/oder ein Hardwaresicherheitsmodul (HSM) (112), mechanisch und kommunikationstechnisch montierbar sind,
wobei das zumindest eine serverseitige physikalische Sicherheitsmodul (212) ausgebildet ist, eine elektronische Anwendung auszuführen;
wobei das zumindest eine serverseitige physikalische Sicherheitsmodul (212) ausgebildet ist, unter Verwendung eines Authentifizierungsprotokolls einen ersten Kommunikationskanal (201) zwischen einem physikalischen SM (223, 123) eines teilnehmerseitigen Kommunikationsgeräts (220) und dem zumindest einen serverseitigen physikalischen SM (212) aufzubauen und die elektronische Anwendung basierend auf einer über den ersten Kommunikationskanal (201) empfangenen Anweisung (203) auszuführen; und
einem Gateway (113) zum Eintritt in den gesicherten Bereich (111) des Servers (110),
wobei das Gateway (113) einen Gatekeeper umfasst, der ausgebildet ist, nur registrierten teilnehmerseitigen Kommunikationsendgeräten (120) den Zugang über das Gateway (113) in den gesicherten Bereich (111) des Servers (110) zu ermöglichen, um den ersten Kommunikationskanal (201) mit dem zumindest einen serverseitigen physikalischen SM (212) aufzubauen.

13. Verfahren (300) zur sicheren Ausführung einer elektronischen Anwendung, mit folgenden Schritten:
Aufbauen (301) eines ersten Kommunikationskanals (201) zwischen einem physikalischen Sicherheitsmodul (SM) (223) eines teilnehmerseitigen Kommunikationsendgeräts (220) und einem serverseitigen physikalischen Sicherheitsmodul (SM) (212) unter Verwendung eines Authentifizierungsprotokolls, wobei das serverseitige physikalische SM (212) in einem gesicherten Bereich (211) eines Servers (210) mechanisch und kommunikationstechnisch montierbar ist, wobei ein Eintritt in den gesicherten Bereich (111) des Servers (110) über ein Gateway (113) erfolgt, welches einen Gatekeeper umfasst, der ausgebildet ist, nur registrierten teilnehmerseitigen Kommunikationsendgeräten (120) den Zugang über das Gateway (113) in den gesicherten Bereich (111) des Servers (110) zu ermöglichen, um den ersten Kommunikationskanal (201) mit dem serverseitigen physikalischen SM (212) aufzubauen;
Aufbauen (302) eines zweiten Kommunikationskanals (202) zwischen einem anwendungsseitigen Kommunikationsendgerät (230) und dem teilnehmerseitigen Kommunikationsendgerät (220); und
Übermitteln (303) einer Anweisung (203) des anwendungsseitigen Kommunikationsendgeräts (230) über den zweiten Kommunikationskanal (202) und den ersten Kommunikationskanal (201) an das serverseitige physikalische Sicherheitsmodul (212), eine elektronische Anwendung auszuführen.
